# EUROPEAN PATENT APPLICATION

(11) **EP 1 405 865 A1**
(43) Date of publication of application: **07.04.2004**
(21) Application number: 02079173.7
(22) Date of filing: 04.10.2002
(51) Int. Cl.: C08F 8/32

(54) **Process for preparing a polymer dispersion**

(71) Applicant: DSM IP Assets B.V., 6411 TE Heerlen (NL)
(72) Inventor: Friederichs, Joseph Petronella, 6019 CC Wessem (NL); Van den Abbeele, Henk Jan Frans, 3290 Schaffen-Diest (BE)
(74) Representative: Mooij, Johannes Jacobus

(57) **Abstract**

The invention relates to a process for preparing an aqueous dispersion of a polymer, which polymer is obtained by dissolving a starting polymer containing maleic anhydride (MA) monomer units and vinyl aromatic monomer units in an aqueous solution of NH₃ or an amine and subjecting this solution to an imidization reaction, characterized in that the reaction is out in the presence of an alkali salt of styrene maleic anhydride copolymer with a molecular mass of from 500 to 10,000 kg/kmol, preferably approx. 1000 kg/kmol, an MA content of more than 30 mol %, with the temperature at which and the period during which the reaction is carried being so chosen that complete imidization is achieved.

The invention also relates to an aqueous dispersion of a polymer containing maleic anhydride (MA) monomer units and vinyl aromatic monomer units characterized in that ther polymer has virtually completely imidized and the dispersion contains a solids content of more than 30 wt.%.

## Description

The invention relates to a process for preparing an aqueous dispersion of a polymer, which polymer is obtained by dissolving a starting polymer containing maleic anhydride (MA) monomer units and vinyl aromatic monomer units in an aqueous solution of NH₃ or an amine and subjecting this solution to an imidization reaction.

Such a process is known from EP-A-1060197. EP-A-1060197 describes a process wherein styrene maleic anhydride copolymer (SMA) is dissolved in ammonia, with the ratio of ammonia to MA being equal to or greater than 2:1. In this process SMA is not more than 75 % imidized. Complete imidization in this process leads to the formation of an unstable dispersion with a very wide particle size distribution.

Such a particle-bearing dispersion is applied as a coating for paper, on which it serves as a top coat. A coater is used in applying the dispersion onto paper. A drawback of the known dispersion is that during drying and calandering the particles fuse, resulting in film formation. Such film formation prevents rapid removal of a solvent or dispersant when the paper is subjected to a printing process employing a dissolved ink or an ink based on an ink dispersed in the dispersant.

The object of the invention is to provide a dispersion suitable for paper coating that does not exhibit film formation during drying and calandering and wherein the structure of the particles is retained during drying.

This object is achieved by the reaction being carried out in the presence of an alkali salt of styrene maleic anhydride copolymer with a molecular mass of from 500 to 10,000 kg/kmol, preferably approx. 1000 kg/kmol, an MA content of more than 30 mol %, with the temperature at which and the period during which the reaction is carried being so chosen that complete imidization is achieved.

In this manner there is provided a dispersion that does not exhibit film formation during coating and wherein the structure of the particles is retained.

The advantage of such a top coat is that it is microporous so that ink solvents and dispersants can be removed rapidly.

In the process according to the invention the starting polymer is dissolved in water, which may or may not contain an emulsifying agent. Next, there is added an aqueous solution of NH₃ or an a amine, hereafter referred to as an R-NH₂ solution, with R being chosen from the series of H, alkyl with 1-18 C atoms and aryl. R preferably is hydrogen.

The starting polymer is also contacted with an alkali salt of SMA having a molecular mass of 500 tot 10,000 kg/kmol, preferably approx. 1000 g/mol, an MA content of more than 30 mol %. The alkali salt preferably is a potassium salt.

The starting polymer with which the dispersion is prepared contains MA monomer units and vinyl aromatic monomer units. Suitable vinyl aromatic monomer units are for example styrene and alpha-methyl styrene. The starting polymer preferably contains styrene monomer units.

A copolymer containing vinyl aromatic monomer units and MA monomer units can be prepared by known processes such as the process described for preparing a copolymer of MA monomer units and styrene, by Hanson and Zimmerman, Ind. Eng. Chem., vol. 49, No. 11 (1957) p.1803-1807.

The starting polymer preferably contains 22-36 mol% of maleic anhydride monomer units and 64-78 mol% of styrene monomer units. In that case, imidization proceeds fairly rapidly and a dispersion can be obtained of a polymer having a glass transition temperature higher than 160°C.

The molecular mass of the starting polymer may vary between wide limits. A starting polymer preferably has a mass-average molecular mass of between 10,000 and 300,000 kg/kmol. The mass-average molecular mass more preferably is between 60,000 and 150,000 kg/kmol. In that way a relatively high solids content is achieved.

In the process according to the invention the starting polymer, together with an aqueous solution of NH₃ or an amine and the alkali salt of styrene maleic anhydride copolymer, may be introduced into an autoclave, with the temperature being at least 120°C, with the molar ratio of MA monomer units to NH₃, or MA to amine, generally being between 1:1 and 1:5 and with the pressure being so high that the aqueous solution cannot boil.
The time needed for virtually complete imidization of MA monomer units in the starting polymer depends on the chosen temperature, pressure, the reactor, the starting amounts and the like, and can readily be determined by experiment. The imidization reaction can be stopped or at least heavily retarded by reducing the temperature to less than 95°C.

In a preferred embodiment of the process, the temperature is between 150 and 160°C, because at that temperature there can be obtained a dispersion that is well defined in terms of properties and composition and with high reproducibility. The molar ratio of MA monomer units to NH₃ or MA to amine preferably is about 1:1, because at higher ratios the obtained dispersion has an obnoxious odour and increased pH. The molar ratio of NH₃ : MA or amine: MA is at least 1. Complete imidization does not take place at a lower ratio. It is preferable to use ammonia or an aliphatic amine, which aliphatic amine is a primary amine. Examples of suitable amines are butyl amine and stearyl amine.

An advantage of the process according to the invention is that it enables a dispersion to be made with a solids content of more than 30 wt.% and even more than 40 wt. %.

A further advantage of the invention is that it enables a dispersion to be made whose particle size is smaller than the wave length of visible light. The average particle size generally is between 20 and 400 µm.

The invention also relates to an aqueous dispersion of a polymer that contains maleic anhydride (MA) monomer units and vinyl aromatic monomer units, characterized in that the MA is virtually completely imidized and the dispersion has a solids content of more than 30 wt %, preferably more than 40 wt. %. Such a dispersion presents the advantage that, on being applied onto paper, it dries rapidly and does not exhibit any splitting. No or relatively little misting arises during application in film press applications.

The aqueous dispersion preferably contains a polymer whose vinyl aromatic monomer units are styrene and whose glass transition temperature is higher than 160°C.

A further advantage of the dispersion according to the invention is that it has a relatively narrow particle size distribution.

The invention also relates to compositions for paper sizing, film press applications or paper coating that contain the dispersion according to the invention.

Compositions for paper sizing contain besides a dispersion obtainable by the process according to the invention one or more customary additives. The composition according to the invention is preferably characterized in that the composition may contain additives such as starch, polyvinyl alcohol hyperbranched polyester amides (Topbrane^{R}), latexes or other binders. These serve to prevent a coating prepared with the dispersion according to the invention from exhibiting tears.

The amount of dispersion contained in the composition preferably is such that the amount of polymer, that is, the dry weight of polymer particles in the dispersion, is between 0.1 and 100 wt.% relative to total dry weight. A composition for paper sizing more preferably contains between 90 and 95 wt.% dry weight of polymer particles relative to total dry weight. A composition may be prepared by, for example, adding a certain amount of the dispersion according to the invention to a solution of the other additives in water.
The invention also relates to paper provided with a paper sizing or paper coating according to the invention.

The invention will now be elucidated with reference to the examples without being limited thereto.

### EXAMPLES AND COMPARATIVE EXPERIMENTS

### Characterization techniques

### PCS measurements

The mean hydrodynamic radius of the polymer particles was determined by Photon Correlation Spectroscopy (PCS). Measurements were made with a set-up from ALV-Laser Vertriebsgesellschaft mbH, of Langen, Germany (Coherent Innova 90 ion-argon laser, using the blue line (488 nm), power 50 mW). The signal was received with the aid of a Thorn-Emi photon multiplier mounted on an ALV/SP-86#053 laser goniometer (photon multiplier supply voltage about 1700 V, measuring angle 90°). The signal was processed by an ALV 5000 Multiple Tau digital correlator equipped with the ALV5000/E for Windows software. The cumulants analysis method was used for processing the measured data and the Stokes-Einstein relationship was used for determining a hydrodynamic radius from the measured diffusion coefficient.

For the PCS measurement the samples were diluted in demineralized water that had been filtered by a filter with filter openings of 0.2 µm in diameter. The samples obtained after conducting a process according to the invention were diluted 500 times (to a concentration of approx. 0.04 wt.% solids or lower), and the samples obtained after conducting a comparative experiment were diluted 50 times, to approx. 0.4 wt.% solids.

Prior to the measurements, the measuring cell was rinsed with particulate-free water and then three times with the sample solution to be measured. A number of samples, from the comparative experiments, were not stable in water. These samples were stabilized using a buffer with pH 9 ± 0.02 (Titrisol of Merck) or a 10⁻³ M aqueous NaOH solution.

### Solids content

The solids content (SC) was determined with the aid of a Mettler type LP16/PM600 infrared drier/weigher. If any polymer was left after the reaction, this was filtered off, prior to determination of the solids content, using a paper filter (MN640m medium retention and filtration speed, supplied by Macherey-Nagel of Germany). Prior thereto, filtering was effected with a metal sieve with meshes 250 µm wide, if necessary. The solids content of the resultant filtrates, that were clear to the eye, was determined in the manner known to those skilled in the art.

### pH measurements

Ph values were measured using a Knick 752 Cl, No. 051489 pH meter. The pH meter was calibrated at 20°C with buffer solutions having a pH of 4.00 (citrate Cl-buffer), 7.0 and 9,00 supplied by Merck, and was equipped with a glass electrode (3M KCI). The pH of the samples was determined at 20°C. Samples from comparative experiments were diluted to a solids content of about 10 wt.% if their solids content, and thus viscosity, was any higher. Dispersions were not diluted.

### Determination of degree of imidization

The degree of imidization of the aqueous dispersions can be measured through for example Raman-FTIR spectroscopy by relating the intensity of absorptions to the intensity of the same absorptions measured for a completely imidized and a completely non-imidized reference compound. Before any calculation was made, the signals were normalized to the absorption signals from the aromatic rings in the polymer chains. In conducting the measurements, the following absorption bands were observed:
- C=O band of imides (around 1768 cm-1, relatively strong signal)
- C=O band of anhydrides (around 1860 cm-1)
- C=O band of acid groups (around 1715 cm-1, relatively weak signal).

As reference samples use was made of an aqueous ammonia solution of a polymer made from 26 mol% maleic anhydride and 74 mol% styrene made with an NH3:MA molar ratio of 3:1 at 50°C (no imide groups) and an imidized SMA powder prepared by mixing 2 g of SMA (28 wt.% MA-; 72 wt.% styrene; molecular weight 110,000 kg/kmol) with 0.50 g of urea in a twin screw extruder for 5 minutes at 240°C, with a speed of 100 revolutions per minute.

### Contact angle measurements

Contact angles were measured using the "Digidrop" contact angle meter supplied by GBX (of Roman, France). 0.5 mg of water was applied onto the sample and the contact angle was measured on the basis of a film of 250 images/sec.

### Example 1

140 grams of ground SMA dissolved in water were introduced into a double-walled, oil-heated reactor of 1 litre. The SMA had an MA content of 26 % and a molecular mass of 80,000 kg/kmol. To this was added a 25 % solution of NH3 at a MA:NH3 ratio of 1:1. In addition, a potassium salt of an SMA with a molecular mass of 1,000 kg/kmol with an MA content of 48 % was added. The ratio of K salt: SMA = 0.03 :1. Next, the reactor was topped up with water to 700 ml and pressurized with nitrogen to a pressure of 0.2 MPa. The temperature was brought to 160°C and the stirrer speed to 800 rpm. The pressure in the reactor was approx. 0.8 MPa. After 6 hours a polymer dispersion with a solids content of approx. 20 wt.% had formed, with particles of between 80 and 120 nm; the MA in these particles had completely imidized. The Tg of the polymer was between 190 and 200°C. The pH of the dispersion was 6.8.

### Example II

245 grams of ground SMA dissolved in water, to which 0.2 gram of Surfinol from Air Products was added, were introduced into a double-walled, oil-heated reactor of 1 litre containing a turbione stirrer. The SMA had an MA content of 26 % and a molecular mass of 80,000 kg/kmol. To this was added a 25 % solution of NH₃ with an MA:NH₃ ratio of 1:1. In addition, a potassium salt of an SMA with a molecular mass of 1,000 kg/kmol and an MA content of 48 % was added. The ratio of K salt:SMA = 0.03 :1. Next, the reactor was topped up with water to 700 ml. The temperature was brought to 160°C and the stirrer speed to 800 rpm. The pressure in the reactor was approx. 0.6 MPa. After 6 hours a polymer dispersion with a solids content of approx. 35 wt.% had formed, with particles of between 80 and 120 nm; the MA in these particles had completely imidized. The Tg of the polymer was between 190 and 200°C. The pH of the dispersion was 6.9.

The dispersions from both examples did not exhibit any film-forming properties during drying. In both cases, the contact angle of the dispersions applied onto paper was smaller than 40°.

### Comparative Experiment A

A dispersion was prepared by introducing into a 10-litre autoclave 3.0 kg of an SMA polymer consisting of 26 wt.% MA monomer units and 74 wt.% styrene monomer units (SMA sz26080, with a dissolving viscosity of 0.35 dl/g (0.2 g SMA per dl of tetrahydrofuran (THF), 25°C), supplied by DSM of the Netherlands) with a solution of NH₃ in demineralized water. The ratio of MA:NH₃ was 1:2. The autoclave was provided with a stirrer and with means of removing samples from the reactor during the reaction. Next, the pressure in the autoclave was increased with N₂ to 0.6 MPa. Stirring was effected at a speed of 210-215 revolutions per minute. The autoclave was heated to 140°C at the rate of 4°C/min, in which process the pressure increased to 1 MPa. After 25 minutes the imidization reaction was stopped by reducing the reaction temperature to 50°C. The degree of imidization achieved proved to be 65%. The solids content of the dispersion was 20 wt. %. The particles of the dispersion formed a film as they were calandered onto paper. The contact angle was 65°.

### Comparative Experiment B

SMA containing 26 % MA, molecular weight 80,000 g/mol and MA: KOH ratio of 1: 0.2 and an NH3 solution with MA : NH₃ ratio of 1: 0.75 were combined in a 10-litre autoclave. The autoclave was provided with a stirrer and with means of removing samples from the reactor during the reaction. Next, the pressure in the autoclave was increased with N₂ to a pressure of 4.10⁵ Pa. Stirring was effected at a speed of 300 revolutions per minute. The autoclave was heated to 140 C. The pressure increased in that process. After 21.5 hours the reaction was stopped by reducing the reaction temperature to room temperature. The total mass of starting materials in the autoclave at the beginning of the reaction was about 7.5 kg. The total amount of starting materials that is used hardly affects the result of a preparation, if at all.

There was obtained a dispersion with a pH of 6.9 and a solids content of 21 wt.%. Particle size approx. 100 nm; the dispersion possessed film-forming properties. The contact angle was 70°.

The contact angles of the coatings prepared with the dispersions according to the invention are substantially smaller than those prepared with the known dispersions. This demonstrates that with the dispersions according to the invention it is possible to produce a coating having much faster water removal than a coating prepared with a known dispersion.

## Claims

1. Process for preparing an aqueous dispersion of a polymer, which polymer is obtained by dissolving a starting polymer containing maleic anhydride (MA) monomer units and vinyl aromatic monomer units in an aqueous solution of NH₃ or an amine and subjecting this solution to an imidization reaction, **characterized in that** the reaction is out in the presence of an alkali salt of styrene maleic anhydride (SMA) copolymer with a molecular mass of from 500 to 10,000 kg/kmol, preferably approx. 1000 kg/kmol, an MA content of more than 30 mol %, with the temperature at which and the period during which the reaction is carried being so chosen that complete imidization is achieved.

2. Process according to Claim 1, wherein the alkali salt is a potassium salt.

3. Process according to either Claim 1 or 2, wherein the molar ratio of MA to the NH3 or the amine 1:1 is.

4. Process according to any one of Claims 1-3, wherein the starting polymer contains 18-50 mol% of maleic anhydride monomer units and 50-82 mol% of vinyl aromatic monomer units.

5. Process according to any one of Claims 1-4, wherein the vinyl aromatic monomer units are styrene.

6. Process according to any one of Claims 1-5, **characterized in that** the starting polymer contains 22-36 mol% of maleic anhydride monomer units and 64-78 mol% of styrene monomer units.

7. Process according to any one of Claims 1-6, wherein the molecular mass of the polymer is between 60,000 and 150,000 kg/kmol.

8. Aqueous dispersion of a polymer containing maleic anhydride (MA) monomer units and vinyl aromatic monomer units, chraracterized in that the polymer has virtually completely imidized and the dispersion contains a soilids content of more than 30 wt.%.

9. Aqueous dispersion according to Claim 8, wherein the vinyl aromatic monomer units are styrene and the Tg of the polymer is more than 190°C.

10. Composition for paper sizing or paper coating containing an aqueous dispersion according to either Claim 8 or 9 and one or more customary additives.

11. Use of the composition for paper sizing according to Claim 10 for the preparation of paper.
